(19) Europäisches Patentamt / European Patent Office / Office européen des brevets

(11) **EP 2 929 310 B1**

(12) **FASCICULE DE BREVET EUROPEEN**

(45) Date de publication et mention de la délivrance du brevet:
**26.10.2016 Bulletin 2016/43**

(21) Numéro de dépôt: **13815043.8**

(22) Date de dépôt: **04.12.2013**

(51) Int Cl.:
*G01J 9/02* *(2006.01)*      *G02B 26/06* *(2006.01)*

(86) Numéro de dépôt international:
**PCT/FR2013/052936**

(87) Numéro de publication internationale:
**WO 2014/087099 (12.06.2014 Gazette 2014/24)**

(54) **DISPOSITIF DE MESURE ET DE CONTROLE DU FRONT D'ONDE D'UN FAISCEAU LUMINEUX COHERENT**

VORRICHTUNG ZUM MESSEN UND REGELN DER WELLENFRONT EINES KOHÄRENTEN LICHTSTRAHLS

DEVICE FOR MEASURING AND CONTROLLING THE WAVE-FRONT OF A COHERENT LIGHT BEAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2012 FR 1261594**

(43) Date de publication de la demande:
**14.10.2015 Bulletin 2015/42**

(73) Titulaire: **Commissariat à l'Energie Atomique et aux Energies Alternatives**
**75015 Paris (FR)**

(72) Inventeurs:
- **LAFOREST, Timothé**
  **1025 St-Sulpice (CH)**
- **DUPRET, Antoine**
  **F-91400 Orsay (FR)**
- **GIGAN, Sylvain**
  **F-75005 Paris (FR)**
- **RAMAZ, François**
  **F-94270 Le Kremlin-bicêtre (FR)**
- **TESSIER, Gilles**
  **F-75010 Paris (FR)**
- **VERDANT, Arnaud**
  **F-38330 Saint Nazaire Les Eymes (FR)**

(74) Mandataire: **Thibon, Laurent**
**Cabinet Beaumont**
**1, rue Champollion**
**38000 Grenoble (FR)**

(56) Documents cités:
EP-A2- 0 135 003      WO-A2-2011/095662
US-A- 5 042 922      US-A1- 2004 125 380

**Description**

Domaine de l'invention

La présente invention concerne un dispositif et un procédé de mesure et de contrôle du front d'onde d'un faisceau lumineux cohérent, par exemple un faisceau laser. Plus particulièrement, la présente invention concerne un tel dispositif permettant la mesure et la modulation de phase ou d'amplitude d'un tel front d'onde.

Exposé de l'art antérieur

Actuellement, la lumière cohérente, et en particulier la lumière laser, est utilisée pour de nombreuses applications, par exemple pour des applications médicales, en microscopie ou encore pour le traitement de l'information avec les fibres optiques. Le front d'onde d'un faisceau laser dépend du type de milieu que le faisceau laser a traversé. Il peut être intéressant d'étudier le front d'onde d'un faisceau laser pour déterminer la nature et la forme du milieu qu'il a traversé. On peut également prévoir, après avoir pris connaissance de la forme du front d'onde, de moduler celui-ci pour que le front d'onde modulé soit adapté à une application donnée.

Le brevet US 5 994 687 décrit un système de contrôle du front d'onde d'un faisceau laser. D'autres exemples de l'état de la technique sont décrits dans les documents US5042922, US20040125380, WO2011095662 et EP0135003.

Résumé

L'objet de la présente invention est de prévoir un système palliant tout ou partie des inconvénients de l'art antérieur, tel que défini dans la revendication 1.

Pour cela, le système comprend une matrice de pixels qui assurent chacun, indépendamment, la détection d'une partie du front d'onde et la modulation d'une partie correspondante d'un faisceau réfléchi.

Ainsi, ce système de mesure et de contrôle du front d'onde d'un faisceau lumineux cohérent, comprend : un dispositif de génération d'un faisceau lumineux de référence cohérent avec le faisceau lumineux cohérent ; un dispositif monolithique partiellement réfléchissant comprenant une matrice de cellules élémentaires, chaque cellule élémentaire comprenant au moins un élément de mesure d'une portion de l'onde incidente interférente entre le faisceau lumineux cohérent et le faisceau lumineux de référence et un élément de modulation de phase du faisceau réfléchi ; et un dispositif de commande de l'élément de modulation de phase tirant profit des informations de l'élément de mesure associé.

De plus, chaque cellule élémentaire comprend au moins un élément de photodétection surmonté d'au moins une première électrode, une première couche de cristaux liquides et une deuxième électrode, la deuxième électrode étant transparente, la première électrode étant prévue pour laisser passer une partie seulement du faisceau interférent incident vers le au moins un élément de photodétection, l'autre partie étant réfléchie.

Selon un mode de réalisation, le dispositif de commande contrôle la tension appliquée entre la première et la deuxième électrode.

Selon un mode de réalisation, la première électrode est métallique et comprend au moins une ouverture en regard du au moins un élément de photodétection.

Selon un mode de réalisation, la première électrode est en oxyde d'indium-étain (ITO).

Selon un mode de réalisation, la deuxième électrode est commune à toutes les cellules élémentaires du dispositif partiellement réfléchissant.

Selon un mode de réalisation, la deuxième électrode est en oxyde d'indium-étain.

Selon un mode de réalisation, le système est adapté à une modulation de phase du faisceau réfléchi par le dispositif partiellement réfléchissant, le système comprenant en outre une deuxième couche de cristaux liquides s'étendant sur la première couche de cristaux liquides, les cristaux de la première et de la deuxième couche de cristaux liquides étant nématiques parallèles, l'orientation des cristaux dans la deuxième couche de cristaux liquides étant perpendiculaire à l'orientation des cristaux dans la première couche de cristaux liquides.

Selon un mode de réalisation, le système est adapté à une modulation de phase du faisceau réfléchi par le dispositif partiellement réfléchissant, la première couche de cristaux liquides étant nématique à orientation parallèle.

Selon un mode de réalisation, le système est adapté à une modulation d'amplitude du faisceau réfléchi par le dispositif partiellement réfléchissant, les cristaux liquides de la première couche de cristaux liquides étant nématiques en hélice, un polariseur étant placé entre l'élément de photodétection et la première électrode, l'orientation du polariseur étant parallèle à l'orientation des molécules de cristaux liquides du côté du polariseur.

Selon un mode de réalisation, le système est adapté à une modulation d'amplitude du faisceau réfléchi par le dispositif partiellement réfléchissant, les cristaux liquides de la première couche de cristaux liquides étant nématiques à orientation parallèle, un polariseur étant placé entre l'élément de photodétection et la première électrode, l'orientation du polariseur étant à 45° par rapport au directeur des cristaux liquides de la première couche de cristaux liquides.

Selon un mode de réalisation, le système comprend en outre au moins un polariseur placé en regard du dispositif partiellement réfléchissant.

Selon un mode de réalisation, le dispositif de commande fournit une commande temporellement continue ou discrète.

Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :

la figure 1 illustre un dispositif permettant le contrôle du front d'onde d'un faisceau lumineux cohérent ;
la figure 2 illustre schématiquement le principe d'un système de contrôle du front d'onde d'un faisceau lumineux cohérent selon un mode de réalisation ;
les figures 3, 4 et 5 illustrent deux variantes de réalisation de pixels d'un dispositif de contrôle d'un faisceau lumineux cohérent selon un mode de réalisation ;
les figures 6A et 6B illustrent des variantes de réalisation de contre-électrodes selon un mode de réalisation ;
la figure 7 illustre une autre variante de réalisation de pixels d'un système de contrôle d'un faisceau lumineux cohérent selon un mode de réalisation ; et
la figure 8 illustre une application d'un dispositif selon un mode de réalisation.

Par souci de clarté, de mêmes éléments ont été désignés par de mêmes références aux différentes figures et, de plus, comme cela est habituel dans la représentation des structures optiques et des systèmes intégrés, les diverses figures ne sont pas tracées à l'échelle.

Description détaillée

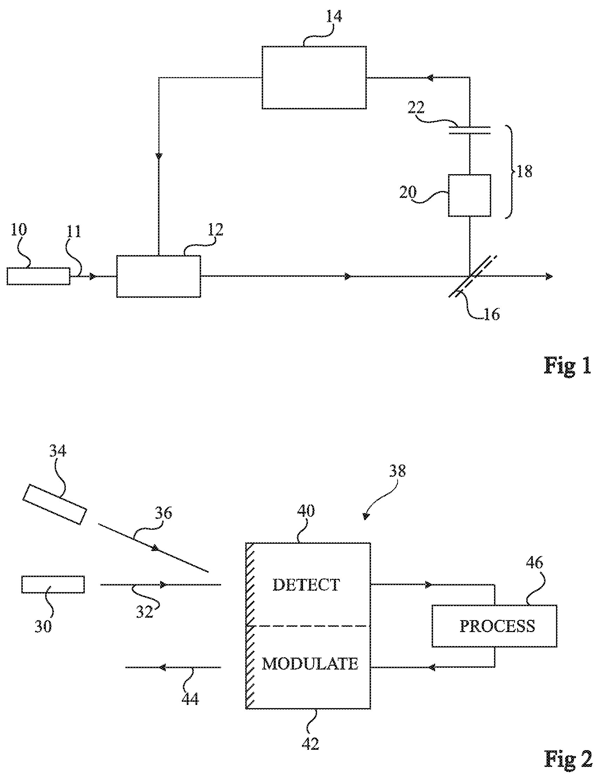

La figure 1 est un schéma sous forme de blocs illustrant un exemple de système de contrôle d'un faisceau lumineux cohérent.

Ce système comprend une source lumineuse cohérente 10 qui fournit un faisceau 11. A titre d'exemple non limitatif, la source lumineuse cohérente 10 peut être une source laser. Le faisceau 11 traverse un dispositif de correction 12 commandé par un dispositif de commande 14. Le faisceau issu du dispositif de correction 12 est dirigé vers une lame séparatrice 16 qui en dévie une partie en direction d'un dispositif de détection de front d'onde 18 et qui transmet le reste du faisceau pour une utilisation ultérieure (à droite dans la figure). Le dispositif de détection 18 comprend un écran à cristaux liquides 20 couplé à une caméra CCD 22. L'information issue du dispositif de détection 18 est transmise au dispositif de commande 14.

En fonctionnement, le front d'onde du faisceau lumineux cohérent est analysé, à l'aide du faisceau dévié par la lame semi-réfléchissante 16, par le dispositif de détection 18. L'information de la forme du front d'onde est fournie au dispositif de commande 14 qui détermine la correction à apporter sur le faisceau lumineux cohérent 11 pour que celui-ci présente, en sortie du dispositif (à droite de la lame séparatrice), un front d'onde désiré.

Un inconvénient d'un système tel que celui de la figure 1 est qu'il dissocie les fonctions de détection, de commande et de modulation par des blocs distincts (bloc de modulation 12, bloc de détection 18 et bloc de commande 14). Ce dispositif implique donc nécessairement une latence importante du fait des transmissions de signaux entre ces différents blocs. En outre, pour que la modulation appliquée sur le faisceau lumineux cohérent 11 soit efficace, une correction itérative est nécessaire. Ainsi, le système de la figure 1 ne permet pas une modulation rapide du front d'onde du faisceau lumineux cohérent, et n'est pas adapté à la modulation d'un faisceau lumineux cohérent présentant un front d'onde variable dans le temps.

Un autre inconvénient du dispositif de la figure 1 réside dans sa complexité de fabrication. En effet, pour que la modulation du front d'onde appliquée au faisceau lumineux cohérent 11 par le bloc 12 soit efficace, les pixels du modulateur 12 doivent être parfaitement alignés avec ceux du détecteur 18, ce qui implique une étape d'alignement fine particulièrement délicate à mettre en oeuvre.

Ainsi, un besoin existe d'un système permettant de combiner détection et modulation du front d'onde d'un faisceau lumineux cohérent facile à fabriquer et plus efficace que les dispositifs existants.

Pour satisfaire à ce besoin ainsi qu'à d'autres, les inventeurs ont prévu un système comprenant une matrice de pixels qui assurent chacun, indépendamment, la détection d'une partie du front d'onde d'un faisceau lumineux cohérent et la modulation d'une partie correspondante d'un faisceau réfléchi.

La figure 2 illustre schématiquement le fonctionnement général d'un système selon un mode de réalisation.

Le système reçoit un faisceau lumineux cohérent 32 issu d'une source 30, par exemple une source laser. On cherche ici à déterminer la forme du front d'onde du faisceau lumineux cohérent 32 et à moduler ce faisceau. Le système comprend en outre une deuxième source 34 d'un faisceau lumineux de référence 36, cohérent avec le faisceau lumineux 32. En pratique, les faisceaux lumineux 32 et 36 peuvent être issus d'une même source, le faisceau lumineux cohérent 32 ayant subi des transformations avant d'arriver sur le dispositif, par exemple en passant au travers d'un milieu diffusant. Les faisceaux 32 et 36 sont dirigés de façon à interférer.

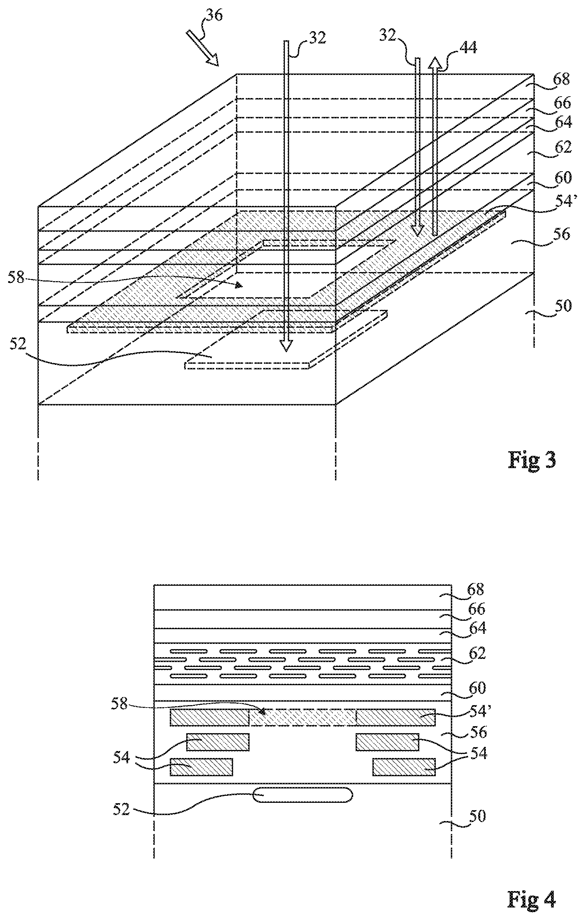

Le système comprend en outre un dispositif unique 38, en partie réflecteur, assurant simultanément une fonction de détection 40 (DETECT) du front d'onde du faisceau d'interférence (entre les faisceaux 32 et 36) et une fonction de modulation 42 (MODULATE) du faisceau réfléchi sur le dispositif. La structure des pixels du dispositif 38 sera décrite plus en détail ci-après en relation avec les figures 3 à 7. Ainsi, le faisceau lumineux 42 réfléchi par le dispositif 38 présente un front d'onde contrôlé. Pour moduler le faisceau lumineux réfléchi, le dispositif 38 comprend au moins une couche de cristaux liquides prise en sandwich entre deux électrodes, l'orientation des cristaux liquides étant contrôlée par la tension appliquée entre les deux électrodes, ce qui permet de réaliser une modulation de phase ou d'amplitude du faisceau réfléchi, comme on le verra ci-après.

Le système comprend en outre un dispositif de traitement et de calcul 46 (PROCESS) qui reçoit les informations du dispositif de détection 40 et qui définit, en fonction de l'information du front d'onde détectée par le dispositif de détection, la modulation de phase que le dispositif de modulation 42 doit appliquer. On notera que, contrairement à ce qui est représenté en figure 2, le dispositif de détection 40 et le dispositif de modulation 42 sont intégrés dans un même dispositif 38 unique, comprenant une matrice de pixels, chaque pixel étant défini de façon à assurer simultanément une fonction de détection et une fonction de modulation de la partie du front d'onde qu'il reçoit. Avantageusement, le dispositif proposé ici fonctionne quelle que soit la source de lumière utilisée, pour autant que la longueur d'onde de cette source soit compatible avec les caractéristiques du détecteur et du modulateur.

Avantageusement, le dispositif décrit ci-dessus permet de réaliser de nombreux traitements basés sur la modulation spatiale du front d'onde. Parmi ces traitements, on peut citer de façon non limitative des techniques d'optique adaptatives, des techniques de modulation de canaux parallèle de communications optiques, ou encore des techniques d'interférométrie. Cette dernière application sera décrite plus en détail ci-après.

L'utilisation de la source 34 d'un faisceau de référence 36 cohérent avec le faisceau objet 32 permet de faire de l'interférométrie entre ces deux faisceaux, et ainsi d'accéder directement au front d'onde du faisceau objet 32. On peut ainsi mesurer, pixel par pixel, la phase du faisceau objet reçu par le dispositif et commander de même en réponse la phase ou l'amplitude de l'onde réfléchie par le dispositif.

La mesure de phase est réalisée par les pixels du détecteur 40, qui sont sensibles à l'intensité du champ lumineux. La superposition, en tout point du détecteur, de l'onde objet à analyser/traiter due au faisceau 32 de valeur $U_0 = A_0.\exp(i\Phi_0)$ et de l'onde de référence due au faisceau 36 de valeur $U_R = A_R.\exp(i\Phi_R)$ permet d'obtenir, au niveau de chaque pixel du détecteur 40, une intensité proportionnelle au cosinus de la phase $\Phi_0$ du faisceau objet 32, selon l'équation suivante ($\Phi_R$ étant la phase du champ de référence, qui est constante) :

$$ I = \left| U_R + U_0 \right|^2 = A_0^2 + A_R^2 + 2 A_0 A_R \cos\left(\Phi_R - \Phi_0\right). $$

Ainsi, le phénomène d'interférence entre les faisceaux objet et de référence 32 et 36 permet une mesure directe au niveau de chaque pixel du déphasage du faisceau lumineux incident 32, et donc du front d'onde de ce faisceau.

Pour réaliser la modulation, on place, dans le dispositif 40, une couche au moins partiellement réflectrice, définie par pixels, surmontée d'une couche de cristaux liquides et d'une électrode principale transparente. On peut commander pour chaque pixel, c'est-à-dire de façon élémentaire, l'orientation des cristaux liquides. Le faisceau incident est donc en partie réfléchi par la couche réflectrice et traverse, deux fois, la couche de cristaux liquides, ce qui permet sa modulation.

Cette structure de base du dispositif 38 permet de moduler la phase du faisceau lumineux. Il sera également possible, comme on le verra ci-après en relation avec des modes de réalisation, de réaliser une modulation d'amplitude en adjoignant au système au moins un polariseur.

Les figures 3 à 7 illustrent plusieurs structures de pixels d'un dispositif de détection et de modulation 38. Ces structures assurent une détection rapide du front d'onde pour une action en contre-réaction adaptée à la modulation désirée.

Les figures 3 et 4 illustrent respectivement une vue en perspective et une vue en coupe d'un pixel d'une matrice formant un dispositif 38 selon un premier mode de réalisation.

Le pixel comprend un substrat semiconducteur 50 en surface duquel est défini un dispositif de photodétection 52. Le dispositif de photodétection peut être une photodiode, une photodiode complètement déplétée, une photodiode à avalanche ou encore une photogrille (encore appelée photogate) dont la zone de collecte de charges photogénérées est située en surface du substrat 50.

Le substrat 50 est surmonté d'un empilement de couches de métallisation comprenant des pistes conductrices 54 séparées par un matériau isolant 56. Par souci de clarté, les pistes conductrices des premiers niveaux de métallisation ne sont pas représentées dans la perspective de la figure 3.

Dans un niveau supérieur de l'empilement d'interconnexion est définie une piste conductrice 54', au moins en partie réfléchissante, qui recouvre au moins une partie du pixel. Dans l'exemple représenté, la région 54' est en un matériau opaque, par exemple dans le même matériau que les pistes conductrices des niveaux d'interconnexion inférieurs (généralement un métal tel que de l'aluminium ou du cuivre). Une ouverture 58 est définie dans la région 54' en regard de la zone de photodétection 52. Ainsi, des rayons lumineux incidents qui arrivent au niveau de l'ouverture 58 atteignent la surface de la zone de photodétection 52, tandis que des rayons lumineux incidents qui arrivent sur la région 54' sont réfléchis par celle-ci. Les surfaces relatives de la région 54' et de l'ouverture 58 sont choisies pour réfléchir une proportion souhaitée du faisceau incident, par exemple entre 40 et 50 % du flux lumineux incident du faisceau 32.

En surface de l'empilement d'interconnexion est formé un empilement d'une première couche d'alignement 60 (couche d'accroche et d'alignement pour des cristaux liquides), d'une couche de cristaux liquides 62, d'une deuxième couche d'alignement 64 et d'une couche conductrice transparente 66. L'empilement comprend en outre à titre d'exemple une plaque supérieure de verre 68. La couche conductrice transparente 66 forme une première électrode de commande des cristaux liquides de la couche 62, tandis que la région 54' forme la deuxième électrode de commande (contre-électrode). La couche conductrice transparente 66 est en un matériau conducteur transparent aux longueurs d'ondes considérées. A titre d'exemple, la couche conductrice transparente 66 peut être en oxyde d'indium-étain (plus connu sous l'acronyme anglais ITO). Les matériaux des diverses couches et régions 56, 60, 62, 64, 66 et 68 et leurs interfaces sont choisis pour éviter les réflexions parasites.

Les éléments d'application de tensions de commande sur les électrodes 54' et 66 ne seront pas décrits en détail, la réalisation de pistes et/ou vias d'accès à des électrodes telles que les électrodes 54' et 66 étant bien connus dans les techniques de circuit intégré.

L'application d'une tension entre les électrodes 54' et 66 permet de modifier la structure des cristaux liquides de la couche 62, et donc la phase du faisceau lumineux réfléchi. On notera que cet ajustement est réalisé pixel par pixel, une contre-électrode 54' étant définie indépendamment dans chacun des pixels.

Pour assurer une modulation de phase du faisceau réfléchi, on prévoit, dans la structure des figures 3 et 4, une couche de cristaux liquides propres à imposer un déphasage à l'onde incidente, ce déphasage dépendant de la tension appliquée entre les électrodes 54' et 66. Cette tension est définie à partir de l'amplitude détectée par le dispositif de détection.

Dans un mode de réalisation, on choisit des cristaux nématiques ayant leurs directeurs parallèles dans un plan parallèle à la surface des couches 60 et 64. Les couches d'alignement 60 et 64 sont définies pour obtenir cette répartition des cristaux liquides. En pratique, cela signifie que, si les couches d'alignement 60 et 64 sont en un matériau polymère tel que du polyimide, des stries parallèles sont formées en surface de ces couches, côté cristaux liquides, pour forcer leur alignement.

Une couche de cristaux liquides nématiques à orientation parallèle permet de faire une modulation de phase pure d'une lumière polarisée incidente, la modulation dépendant du champ électrique appliqué entre deux électrodes formées de part et d'autre de la couche de cristaux liquides. Si la polarisation de la lumière incidente est parallèle à la direction des directeurs des cristaux liquides, la tension appliquée est directement image du déphasage de la lumière. Le retard maximum $\Delta\Phi$, engendré sur une lumière incidente de longueur d'onde $\lambda$ par une couche de cristaux liquides d'épaisseur d et dont la différence entre l'indice de réfraction ordinaire $n_o$ et l'indice de réfraction extraordinaire ne s'écrit $\Delta n$ ($\Delta n = n_o - n_e$), s'exprime par :

$$\Delta\Phi = \frac{2\pi}{\lambda}\Delta n.d \ ,$$

$\Delta n$ dépendant de la tension appliquée. Ainsi, pour le système proposé qui agit sur le faisceau réfléchi de la lumière, après un aller-retour dans la couche de cristaux liquides, le déphasage engendré sera donc égal à $2\Delta\Phi$.

On notera que la différence entre les indices ordinaire et extraordinaire $\Delta n$ du cristal et leur variation en fonction de la tension appliquée est une caractéristique des molécules de cristaux liquides utilisées, et varie typiquement entre 0,1 et 0,2. Le choix des molécules permet donc d'avoir une liberté sur l'épaisseur de la couche de cristal liquide pour une modulation de phase du faisceau réfléchi.

On notera que, pour ce premier mode de réalisation, il convient que la lumière incidente (faisceau 32) soit polarisée de façon alignée avec l'orientation des cristaux liquides. En effet, pour appliquer une modulation de phase, il est nécessaire que la polarisation de la lumière incidente soit parallèle à la direction des directeurs des molécules de cristaux liquides.

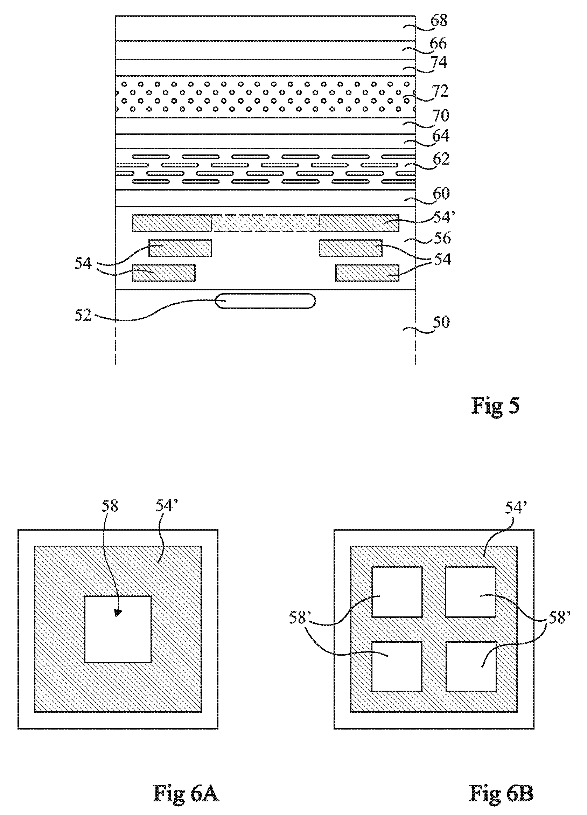

Pour s'affranchir de cette contrainte on pourra utiliser une deuxième variante de réalisation illustrée en figure 5.

Dans le dispositif de la figure 5, chaque pixel comprend un substrat semiconducteur 50 en surface duquel est défini un dispositif de photodétection 52. Le substrat 50 est surmonté d'un empilement de couches de métallisation comprenant des pistes conductrices 54 séparées par un matériau isolant 56. Dans un niveau supérieur de l'empilement d'interconnexion est définie une région conductrice 54' au moins en partie réfléchissante qui recouvre une partie du pixel. Dans l'exemple de la figure 5, la région 54' est en un matériau opaque, par exemple métallique, et une ouverture 58 est définie dans la région 54' en regard de la zone de photodétection 52.

En surface de l'empilement d'interconnexion est formé un empilement comprenant :

- une première couche d'alignement 60 pour une première couche de cristaux liquides,
- une première couche de cristaux liquides 62,
- une deuxième couche d'alignement 64 pour la première couche de cristaux liquides 62,
- une première couche d'alignement 70 pour une deuxième couche de cristaux liquides,
- une deuxième couche de cristaux liquides 72,
- une deuxième couche d'alignement 74 pour la deuxième couche de cristaux liquides 72,
- une couche conductrice transparente 66, et
- une plaque de verre protectrice 68.

La couche conductrice transparente 66 forme une première électrode de commande du positionnement des cristaux liquides des couches 62 et 72, tandis que la région 54' forme la deuxième électrode de commande. Comme dans le cas de la structure des figures 3 et 4, les éléments d'application d'une tension de commande entre les électrodes 54' et 66 ne seront pas décrits en détail.

Le dispositif de la figure 5 permet de réaliser une modulation de phase de l'onde réfléchie par le pixel (sur la couche 54'), sans nécessiter que les ondes incidentes aient une polarisation particulière. Pour cela, les cristaux liquides des couches 62 et 72 doivent être orientés dans des directions parallèles à la surface des couches, et dans des directions perpendiculaires (les cristaux liquides de la couche 62 ont leurs directeurs, en vue de dessus, perpendiculaires aux directeurs des cristaux liquides de la couche 72). On notera que, à titre de variante, les couches d'alignement 64 et 70 pourront être réunies en une unique couche, par exemple en un polymère.

En fonction de la tension appliquée sur les électrodes 54' et 66, les cristaux liquides des couches 62 et 72 s'orientent, ce qui permet une modulation de phase de la lumière réfléchie par l'électrode 54'. La publication intitulée "Polarization-independent liquid crystal phase modulator using a thin polymer-separated double-layered structure", OPTICS EXPRESS, 31/10/2005, Vol. 13, N°22 (8746), précise des valeurs de tensions à appliquer sur un empilement de deux couches de cristaux liquides pour obtenir une modulation de phase désirée du faisceau lumineux.

Dans ce deuxième mode de réalisation, la modulation de phase est réalisée indépendamment de la polarisation de la lumière incidente. En effet, les couches de cristaux liquides 62 et 72 permettent de moduler toutes les composantes du champ de la même manière.

On peut également montrer que le retard de phase introduit par les couches intermédiaires (64, 70) entre les deux couches de cristaux liquides se compense, ce qui permet de conserver la même dynamique de déphasage.

Les systèmes décrits ci-dessus permettent d'assurer au niveau de chaque pixel une modulation de phase. Pour assurer une modulation d'amplitude, on pourra prévoir d'ajouter au système un ou plusieurs polariseurs fournissant des amplitudes différentes pour des ondes différemment déphasés.

Par exemple, dans un dispositif comprenant des pixels similaires à celui des figures 3 et 4, un polariseur peut être intercalé entre l'empilement d'interconnexion 56 et la couche d'alignement 60. Les cristaux de la couche de cristaux liquides sont prévus (grâce aux couches d'alignement 60 et 64) de façon à être en phase nématique en hélice (ou twistés). Un polariseur est placé devant le dispositif, dans la zone d'interférence entre les faisceaux 32 et 36 (ou intégré en surface du dispositif). Lorsqu'un potentiel est appliqué de part et d'autre de la couche de cristaux liquides, l'hélice des cristaux liquides tourne plus ou moins, ce qui, avec l'association du polariseur, modifie l'amplitude du faisceau réfléchi. Dans cet exemple, le polariseur intercalé entre les couches 56 et 60 est orienté perpendiculairement au polariseur placé devant le dispositif, et le polariseur intercalé est orienté dans une direction parallèle à la direction des cristaux liquides au niveau de l'interface avec la couche 60.

On peut également considérer un dispositif similaire à celui des figures 3 et 4, dans lequel un polariseur est intercalé entre l'empilement d'interconnexion 56 et la couche d'alignement 60. Les cristaux de la couche de cristaux liquides sont prévus dans cette variante de façon à être en phase nématique à alignement parallèle (grâce aux couches d'alignement 60 et 64). Un polariseur est placé devant le dispositif, dans la zone d'interférence entre les faisceaux 32 et 36 (ou intégré en surface du dispositif). Les polariseurs sont orientés à 45° par rapport à l'orientation des cristaux liquides, et sont placés à 90° l'un par rapport à l'autre.

Dans cette dernière variante, l'intensité réfléchie par le dispositif s'écrit :

$$I = \sin^2\left(\frac{2\pi d\Delta n}{\lambda}\right)I_0,$$

$I_0$ étant l'intensité incidente sur le dispositif, $\lambda$ la longueur d'onde du faisceau lumineux, d l'épaisseur de la couche 62 et $\Delta n$ la différence entre l'indice de réfraction ordinaire $n_o$ et l'indice de réfraction extraordinaire ne des cristaux liquides. L'amplitude du faisceau réfléchi est donc directement fonction de la tension appliquée de part et d'autre de la couche 62 de cristaux liquides.

On pourra de même associer un ou plusieurs polariseurs à la structure de la figure 5 pour obtenir une modulation d'amplitude.

Les figures 6A et 6B illustrent, en vue de dessus, deux variantes de réalisation d'une électrode inférieure 54' formée au-dessus d'un pixel d'un dispositif 38 de détection et de modulation d'un faisceau lumineux cohérent.

La figure 6A reprend la structure d'électrode 54' des figures 3, 4 et 5, c'est-à-dire que, pour chaque pixel du détecteur, l'électrode 54' comprend une région réflectrice périphérique au milieu de laquelle est définie une ouverture 58 formée en regard d'une zone de photodétection 52.

En figure 6B, la structure 54' diffère de celle de la figure 6A en ce que plusieurs ouvertures 58' sont définies dans la région réflectrice. En pratique, chaque ouverture 58' peut être associée à un photodétecteur indépendant formé dans le substrat 50. Ainsi, chaque pixel, dont la surface est définie par la taille de l'électrode 54', comprend plusieurs photodétecteurs. Cette structure peut avoir un intérêt par exemple dans le cas où plusieurs mesures sont nécessaires par pixel. Les différentes mesures peuvent ainsi être réalisées simultanément. D'autres variantes de réalisation de la contre-électrode 54' pourront également être prévues. Notamment, le nombre et la forme des ouvertures 58/58' pourront être différents de ceux proposés ici.

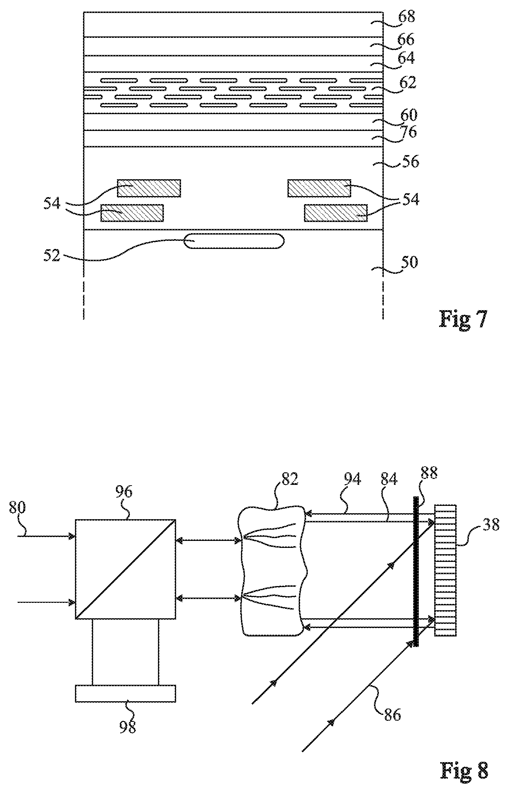

La figure 7 illustre un autre mode de réalisation d'un pixel d'un dispositif 38.

Le pixel illustré en figure 7 est similaire à celui des figures 3 et 4, sauf en ce qui concerne l'électrode inférieure 54' qui est absente en figure 7. Dans ce mode de réalisation, cette électrode est remplacée par une couche conductrice transparente 76 qui est placée entre l'empilement d'interconnexion 56 et la couche d'alignement 60.

Le matériau de la couche conductrice transparente 76 est choisi avec des coefficients de réflexion et de transmission adaptés pour qu'une partie du faisceau lumineux incident atteigne une ou plusieurs zones de photodétection sous-jacentes et qu'une autre partie soit réfléchie, et modulée comme désiré. A titre d'exemple, l'électrode conductrice transparente 76 pourra être en oxyde d'indium-étain (ITO) et présenter une épaisseur comprise entre 50 et 100 nm. En effet, ce matériau est bien adapté à transmettre une partie des rayons lumineux incidents vers la ou les zones de réflexion et de photodétection sous-jacentes. Dans ce cas, comme précédemment, la couche réflectrice pourra être un diélectrique ou un métal.

La variante de la figure 7 peut permettre une modulation d'amplitude ou de phase, si la couche de cristaux liquides est prévue de la façon décrite en relation avec les figures 3 et 4. On pourra également prévoir de combiner les variantes des figures 5 et 7, en formant une deuxième couche de cristaux liquides correctement orientés en surface de la couche 62, pour former un dispositif permettant la modulation de phase du faisceau réfléchi par le dispositif. Le fonctionnement de ces dispositifs (l'orientation des cristaux liquides dans la ou les couches de cristaux liquides étant définie de façon adaptée) étant similaire aux fonctionnements ci-dessus, il ne sera pas décrit de nouveau en détail ici. On notera également que, dans la variante de la figure 7, le dispositif de traitement et de calcul devra être adapté pour prendre en compte le fait que le signal reçu par la ou les zones de photodétection est influencé par un passage dans la couche de cristaux liquides 62 soumise à une tension de commande.

Avantageusement, le système proposé ici assure une réactivité détection/modulation plus importante que les dispositifs connus, puisque ces deux fonctions sont intégrées dans un même dispositif et cela de manière compacte. En outre, l'intégration de ces deux fonctions directement au sein des pixels de détection élimine les problèmes d'alignement des dispositifs proposés précédemment.

La figure 8 illustre une application possible d'un dispositif selon un mode de réalisation à un système de focalisation d'un faisceau lumineux cohérent.

Dans cet exemple d'application, un faisceau lumineux cohérent 80, par exemple un faisceau laser, atteint un milieu diffusant 82. Par milieu diffusant, on entend ici un milieu inhomogène perturbant la propagation d'une onde, par exemple une interface rugueuse comme un verre dépoli, un milieu turbide comme du lait ou un milieu biologique, ou encore un milieu fortement diffusant comme de la peinture blanche. En sortie du milieu diffusant (en réflexion ou en transmission), le faisceau obtenu 84 est fortement déformé et est transmis vers un dispositif d'analyse et de modulation 38 tel que décrit ci-dessus. Un faisceau lumineux de référence 86, cohérent avec le faisceau 80 (par exemple issu de la même source que le faisceau 80), est prévu pour interférer avec le faisceau 84 au niveau du détecteur du dispositif 38. Le dispositif 38 est associé à un dispositif de traitement et de calcul non représenté. Comme décrit ci-dessus, le faisceau 94 réfléchi par le dispositif 38 peut être modulé en phase et/ou en amplitude. Pour cela, un polariseur 88 peut être placé en regard du dispositif 38, comme cela a été décrit précédemment.

Avantageusement, la détection du faisceau par le dispositif de détection 40 du dispositif 38 permet de connaître l'effet du milieu diffusant 82 sur le faisceau lumineux. Une fois cet effet connu, on peut appliquer un algorithme de modulation de phase et/ou d'amplitude de façon que le faisceau 94 réfléchi par le dispositif 38 soit adapté à ce milieu. On peut notamment prévoir d'appliquer un algorithme permettant de focaliser le faisceau lumineux réfléchi en un point prédéterminé à travers ou dans le milieu diffusant.

Cette solution peut être tout particulièrement intéressante dans le domaine médical, et plus particulièrement pour le traitement de patients mettant en oeuvre des focalisations de faisceaux lumineux cohérents. En effet, on peut prévoir simultanément la détermination de la nature d'un milieu diffusant tel qu'une portion du corps humain, et la focalisation du faisceau réfléchi sur une portion de ce milieu diffusant, par exemple pour détruire une cellule ou une zone malade.

On peut également prévoir que le dispositif 38 assure une fonction de conjugué de phase 94. Cette fonction permet de focaliser le faisceau réfléchi sur la source du faisceau incident. Dans ce cas, on détermine la phase du champ objet $\varphi_{OBJET}$, puis on impose sur le modulateur une phase égale à -$\varphi_{OBJET}$. Un décalage de phase permet, à titre de variante, de déplacer le point de focalisation du faisceau réfléchi.

A titre d'exemple, dans le cas où on souhaite mesurer la phase d'un signal modulé en fréquence, la mesure de la phase du champ objet $\varphi_{OBJET}$ peut être faite par une méthode d'interférométrie à décalage de phase à partir de l'enregistrement de plusieurs mesures appelées hologrammes. Cette mesure peut être faite avec 2, 3 ou 4 hologrammes. Dans le cas d'une mesure de deux hologrammes, on enregistre deux hologrammes dont la phase de référence est décalée de n.

Dans ce cas, l'intensité pour chaque hologramme sur les pixels vaut, avec les mêmes notations que précédemment :

$$I_0 = \left|U_0\right|^2 = A_0^2 + A_R^2 + 2A_0 A_R \cos\left(\Phi_R\left(0\right) - \Phi_0\right)$$

$$I_\pi = \left|I_\pi\right|^2 = A_0^2 + A_R^2 + 2A_0 A_R \cos\left(\Phi_R\left(\pi\right) - \Phi_0\right)$$

On peut ainsi retrouver la phase $\Phi_0$ en écrivant la différence $I_0$-$I_\pi$ :

$$I_0 - I_\pi = 4A_0 A_R \cos\left(\Phi_0\right),$$

et donc :

$$\Phi_0 = \arccos\left(\frac{I_0 - I_\pi}{4\sqrt{A_0 A_R}}\right).$$

On détermine ainsi la valeur -$\Phi_0$ à appliquer en modulation du faisceau réfléchi. On notera que, pour une méthode à quatre hologrammes, la phase de référence sera décalée entre chaque hologramme de n/2 et, pour une méthode à trois hologrammes, la phase de référence sera décalée entre chaque hologramme de 2n/3.

Dans le cas où le signal n'est pas modulé en fréquence, la phase du champ objet $\varphi_{OBJET}$ correspond simplement à l'intensité mesurée.

On notera que cette méthode d'interférométrie est tout particulièrement adaptée à la formation d'électrodes de commande de cristaux liquides telles que celle de la figure 6B. En effet, on peut prévoir que les différentes zones de photodétection réalisent simultanément les acquisitions ci-dessus.

En figure 8 est représenté un cube séparateur de faisceaux 96 qui est positionné entre le faisceau 80 et le milieu diffusant 82. Le cube séparateur est prévu de façon à détourner une partie du faisceau réfléchi en sortie du milieu diffusant 82 vers un deuxième détecteur 98 qui permet, si cela est désiré, d'effectuer une mesure dans un autre plan que celui du dispositif de détection et de modulation 38.

Une autre variante d'application d'un dispositif tel que proposé ici consiste à placer deux briques élémentaires de dispositifs 38 ou plus, associés à des sources de référence. Notamment, on peut prévoir de placer deux dispositifs 38 en regard, un faisceau étant amené sur un premier de ces dispositifs par exemple par une lame séparatrice. Le faisceau issu du premier dispositif est modulé, à l'aide d'une détection d'interférométrie avec une source de référence, et est renvoyé vers un deuxième dispositif 38. Celui-ci renvoie une onde modulée comme désiré vers le premier dispositif 38, et ainsi de suite. Notamment, en plaçant un milieu diffusant entre les deux dispositifs 38, un tel dispositif permet de converger vers un mode de transmission maximale du milieu diffusant.

Les dispositifs de modulation proposés ci-dessus peuvent également être utilisés pour une large gamme d'applications, pour réaliser une détection de front d'onde en parallèle d'une modulation de ce front d'onde (avec éventuellement une étape de calcul intermédiaire). On pourra notamment utiliser ces dispositifs pour qualifier des transferts dans des fibres optiques, et pour vérifier qu'une adaptation des fibres optiques correspond bien à un objectif désiré.

Dans toutes les applications ci-dessus, l'état du dispositif de modulation pendant les phases de mesure pourra être quelconque, connu ou non.

Des modes de réalisation particuliers ont été décrits. Diverses variantes et modifications apparaîtront à l'homme de l'art. Bien que l'on ait proposé ici l'utilisation de cristaux liquides, et à titre d'exemple de cristaux liquides nématiques, toute autre structure apte à conférer à une onde lumineuse un déphasage variable en réponse à un signal de commande pourra être utilisée. En outre, divers modes de réalisation avec diverses variantes ont été décrits ci-dessus. On notera que l'homme de l'art pourra combiner divers éléments de ces divers modes de réalisation et variantes sans faire preuve d'activité inventive.

## Revendications

1. Système de mesure et de contrôle du front d'onde d'un faisceau lumineux cohérent (32), comprenant :

   un dispositif de génération d'un faisceau lumineux de référence (36) cohérent avec ledit faisceau lumineux cohérent (32) ;
   un dispositif monolithique partiellement réfléchissant (38) comprenant une matrice de cellules élémentaires, chaque cellule élémentaire comprenant au moins un élément de mesure (40) d'une portion de l'onde incidente interférente entre le faisceau lumineux cohérent et le faisceau lumineux de référence et un élément (42) de modulation de phase du faisceau réfléchi ; et
   un dispositif de commande (46) dudit élément de modulation de phase tirant profit des informations de l'élément de mesure associé,
   dans lequel chaque cellule élémentaire comprend au moins un élément de photodétection (52) surmonté d'au moins une première électrode (54', 76), une première couche de cristaux liquides (62) et une deuxième électrode (66), la deuxième électrode étant transparente, la première électrode (54', 76) étant prévue pour laisser passer une partie seulement du faisceau interférent incident vers ledit au moins un élément de photodétection (52), l'autre partie étant réfléchie.

2. Système selon la revendication 1, dans lequel le dispositif de commande (46) contrôle la tension appliquée entre la première (54', 76) et la deuxième électrode (66).

3. Système selon la revendication 1, dans lequel la première électrode (54', 76) est métallique et comprend au moins une ouverture (58, 58') en regard dudit au moins un élément de photodétection (52).

4. Système selon la revendication 1, dans lequel la première électrode (54', 76) est en oxyde d'indium-étain (ITO).

5. Système selon l'une quelconque des revendications 1 à 4, dans lequel la deuxième électrode (66) est commune à toutes les cellules élémentaires du dispositif partiellement réfléchissant (38).

6. Système selon l'une quelconque des revendications 2 à 5, dans lequel la deuxième électrode (66) est en oxyde d'indium-étain.

7. Système selon l'une quelconque des revendications 2 à 6, adapté à une modulation de phase du faisceau réfléchi par le dispositif partiellement réfléchissant (38), comprenant en outre une deuxième couche de cristaux liquides (72) s'étendant sur la première couche de cristaux liquides (62), les cristaux de la première et de la deuxième couche de cristaux liquides étant nématiques parallèles, l'orientation des cristaux dans la deuxième couche de cristaux liquides (72) étant perpendiculaire à l'orientation des cristaux dans la première couche de cristaux liquides (62).

8. Système selon l'une quelconque des revendications 1 à 7, adapté à une modulation de phase du faisceau réfléchi par le dispositif partiellement réfléchissant (38), dans lequel la première couche de cristaux liquides (62) est nématique à orientation parallèle.

**9.** Système selon l'une quelconque des revendications 1 à 8, adapté à une modulation d'amplitude du faisceau réfléchi par le dispositif partiellement réfléchissant (38), dans lequel les cristaux liquides de la première couche de cristaux liquides (62) sont nématiques en hélice, un polariseur étant placé entre l'élément de photodétection (52) et la première électrode (54', 76), l'orientation du polariseur étant parallèle à l'orientation des molécules de cristaux liquides du côté dudit polariseur.

**10.** Système selon l'une quelconque des revendications 1 à 6, adapté à une modulation d'amplitude du faisceau réfléchi par le dispositif partiellement réfléchissant (38), dans lequel les cristaux liquides de la première couche de cristaux liquides (62) sont nématiques à orientation parallèle, un polariseur étant placé entre l'élément de photodétection (52) et la première électrode, l'orientation du polariseur étant à 45° par rapport au directeur des cristaux liquides de la première couche de cristaux liquides (62).

**11.** Système selon la revendication 9 ou 10, comprenant en outre au moins un polariseur placé en regard du dispositif partiellement réfléchissant.

**12.** Système selon l'une quelconque des revendications 1 à 11, dans lequel le dispositif de commande (46) fournit une commande temporellement continue ou discrète.

**Patentansprüche**

**1.** System zum Messen und Steuern der Wellenfront eines kohärenten Lichtstrahls (32), welches Folgendes aufweist:

eine Vorrichtung zum Erzeugen eines Referenzlichtstrahls (36), der mit dem kohärenten Lichtstrahl (32) kohärent ist;
eine teilweise reflektierende monolithische Vorrichtung (38), die eine Anordnung von Elementarzellen aufweist, wobei jede Elementarzelle zumindest ein Element (40) aufweist, um einen Teil der einfallenden Welle zu messen, die eine Interferenz zwischen dem kohärenten Lichtstrahl und dem Referenzlichtstrahl aufweist, und ein Element (42) zum Modulieren der Phase des reflektierten Strahls; und
eine Vorrichtung (46) zum Steuern des Phasenmodulationselementes unter Verwendung der Informationen von dem assoziierten Messelement, wobei jede Elementarzelle zumindest ein Photodetektionselement (52) aufweist, auf dem zumindest eine erste Elektrode (54', 76) angeordnet ist, weiter eine erste Flüssigkristallschicht (62) und eine zweite Elektrode (66), wobei die zweite Elektrode transparent ist, wobei die erste Elektrode (54', 76) vorgesehen ist, um nur einen Teil des auftreffenden eine Interferenz aufweisenden Strahls zu dem mindestens einen Photodetektionselement (52) durchzulassen, wobei der andere Teil reflektiert wird.

**2.** System nach Anspruch 1, wobei die Steuervorrichtung (46) die Spannung steuert, welche zwischen der ersten Elektrode (54', 76) und der zweiten Elektrode (66) angelegt ist.

**3.** System nach Anspruch 1, wobei die erste Elektrode (54', 76) aus Metall ist und zumindest eine Öffnung (58, 58') gegenüberliegend zu dem mindestens einen Photodetektionselement (52) aufweist.

**4.** System nach Anspruch 1, wobei die erste Elektrode (54', 76) aus IndiumZinn-Oxyd (ITO = indium-tin oxide) gemacht ist.

**5.** System nach einem der Ansprüche 1 bis 4, wobei die zweite Elektrode (66) gemeinsam für alle Elementarzellen der teilweise reflektierenden Vorrichtung (38) vorgesehen ist.

**6.** System nach einem der Ansprüche 2 bis 5, wobei die zweite Elektrode (66) aus Indium-Zinn-Oxyd gemacht ist.

**7.** System nach einem der Ansprüche 2 bis 6, welches für eine Phasenmodulation des Strahls, der von der teilweise reflektierenden Vorrichtung (38) reflektiert wird, ausgebildet ist, wobei das System weiter eine zweite Flüssigkristallschicht (72) aufweist, die sich über die erste Flüssigkristallschicht (62) erstreckt, wobei die Kristalle der ersten und der zweiten Flüssigkristallschicht parallele nematische Kristalle sind, wobei die Orientierung der Kristalle in der zweiten Flüssigkristallschicht (72) senkrecht zur Orientierung der Kristalle in der ersten Flüssigkristallschicht (62) ist.

**8.** System nach einem der Ansprüche 1 bis 7, welches für eine Phasenmodulation des Strahls ausgebildet ist, der von der teilweise reflektierenden Vorrichtung (38) reflektiert wird, wobei die erste Flüssigkristallschicht (62) nematisch mit paralleler Orientierung ist.

9. System nach einem der Ansprüche 1 bis 8, das für eine Amplitudenmodulation des Strahls ausgebildet ist, der von der teilweise reflektierenden Vorrichtung (38) reflektiert wird, wobei die Flüssigkristalle der ersten Flüssigkristallschicht (62) Twisted-Nematik- bzw. TN-Kristalle sind, wobei ein Polarisierungselement zwischen dem Photodetektionselement (52) und der ersten Elektrode (54', 76) angeordnet ist, wobei die Orientierung des Polarisierungselementes parallel zur Orientierung der Flüssigkristallmoleküle auf der Seite des Polarisierungselementes ist.

10. System nach einem der Ansprüche 1 bis 6, welches für eine Amplitudenmodulation des Strahls ausgebildet ist, der von der teilweise reflektierenden Vorrichtung (38) reflektiert wird, wobei die Flüssigkristalle der ersten Flüssigkristallschicht (62) nematisch mit paralleler Orientierung sind, wobei ein Polarisierungselement zwischen dem Photodetektionselement (52) und der ersten Elektrode angeordnet ist, wobei die Orientierung des Polarisierungselementes in einem Winkel von 45° relativ zum Leiter der Flüssigkristalle der ersten Flüssigkristallschicht (62) ist.

11. System nach Anspruch 9 oder 10, welches weiter mindestens ein Polarisierungselement aufweist, welches gegenüberliegend zu der teilweise reflektierenden Vorrichtung angeordnet ist.

12. System nach einem der Ansprüche 1 bis 11, wobei die Steuervorrichtung (46) ein zeitlich kontinuierlich oder unterschiedliches Steuersignal ausgibt.

**Claims**

1. A system for measuring and controlling the wavefront of a coherent light beam (32), comprising:

   a device for generating a reference light beam (36) coherent with said coherent light beam (32);
   a partially reflective monolithic device (38) comprising an array of elementary cells, each elementary cell comprising at least one element (40) for measuring a portion of the incident wave interfering between the coherent light beam and the reference light beam and an element (42) for modulating the phase of the reflected beam; and
   a device (46) for controlling said phase modulation element making use of the information from the associated measurement element,
   wherein each elementary cell comprises at least one photodetection element (52) topped with at least a first electrode (54', 76), a first liquid crystal layer (62) and a second electrode (66), the second electrode being transparent, the first electrode (54', 76) being provided to let through a portion only of the incident interfering beam towards said at least one photodetection element (52), the other portion being reflected.

2. The system of claim 1, wherein the control device (46) controls the voltage applied between the first (54', 76) and the second electrode (66).

3. The system of claim 1, wherein the first electrode (54', 76) is metallic and comprises at least one opening (58, 58') opposite said at least one photodetection element (52).

4. The system of claim 1, wherein the first electrode (54', 76) is made of indium-tin oxide (ITO).

5. The system of any of claims 1 to 4, wherein the second electrode (66) is common to all the elementary cells of the partially reflective device (38).

6. The system of any of claims 2 to 5, wherein the second electrode (66) is made of indium-tin oxide.

7. The system of any of claims 2 to 6, adapted to a phase modulation of the beam reflected by the partially reflective device (38), the system further comprising a second liquid crystal layer (72) extending over the first liquid crystal layer (62), the crystals of the first and of the second liquid crystal layer being parallel nematic crystals, the orientation of the crystals in the second liquid crystal layer (72) being perpendicular to the orientation of the crystals in the first liquid crystal layer (62).

8. The system of any of claims 1 to 7, adapted to a phase modulation of the beam reflected by the partially reflective device (38), wherein the first liquid crystal layer (62) is nematic with a parallel orientation.

9. The system of any of claims 1 to 8, adapted to an amplitude modulation of the beam reflected by the partially-reflective device (38), wherein the liquid crystals of the first liquid crystal layer (62) are twisted nematic crystals, a polarizer being placed between the photodetection element (52) and the first electrode (54', 76), the orientation of the polarizer being parallel to the orientation of the liquid crystal molecules on the polarizer side.

10. The system of any of claims 1 to 6, adapted to an amplitude modulation of the beam reflected by the partially reflective device (38), wherein the liquid crystals of the first liquid crystal layer (62) are nematic with a parallel orientation, a polarizer being placed between the photodetection element (52) and the first electrode, the orientation of the polarizer being at a 45° angle relative to the director of the liquid crystals of the first liquid crystal layer (62).

11. The system of claim 9 or 10, further comprising at least one polarizer placed opposite the partially reflective device.

12. The system of any of claims 1 to 11, wherein the control device (46) outputs a temporally continuous or discrete control signal.

EP 2 929 310 B1

Fig 1

Fig 2

Fig 3

Fig 4

Fig 5

Fig 6A

Fig 6B

**Fig 7**

**Fig 8**

**EP 2 929 310 B1**

## RÉFÉRENCES CITÉES DANS LA DESCRIPTION

**Documents brevets cités dans la description**

- US 5994687 A
- US 5042922 A
- US 20040125380 A
- WO 2011095662 A
- EP 0135003 A

**Littérature non-brevet citée dans la description**

- Polarization-independent liquid crystal phase modulator using a thin polymer-separated double-layered structure. *OPTICS EXPRESS,* 31 Octobre 2005, vol. 13 (22), 8746